# EUROPÄISCHE PATENTSCHRIFT

(11) **EP 0 812 652 B1**
(45) Veröffentlichungstag und Bekanntmachung des Hinweises auf die Patenterteilung: **30.10.2002**
(21) Anmeldenummer: 97109249.9
(22) Anmeldetag: 07.06.1997
(51) Int. Cl.: B23Q 1/48

(54) **Vorrichtung zur Bearbeitung und/oder Montage von Werkstücken**
Device for manufacturing and/or assembling workpieces
Dispositif pour usiner et/ou monter des pièces

(30) Priorität: 13.06.1996 DE 19623511
(43) Veröffentlichungstag der Anmeldung: 17.12.1997
(73) Patentinhaber: Verein Deutscher Werkzeugmaschinenfabriken e.V. (VDW), 60325 Frankfurt am Main (DE)
(72) Erfinder: Weck, Manfred, Prof. Dr.-Ing. Dr.-Ing. h.c., 52074 Aachen (DE); Asbeck, Jochen, Dr.-Ing., 50126 Bergheim (DE); Leibinger, Peter, Dipl.-Ing., 52064 Aachen (DE); Vites, Boris, Dr.-Ing., 52066 Aachen (DE)
(74) Vertreter: Kohl, Karl-Heinz

(56) Entgegenhaltungen:
- EP-A- 0 674 969
- FR-A- 2 612 826
- US-A- 5 592 793

## Beschreibung

Die Erfindung betrifft eine Vorrichtung zur Bearbeitung und/oder Montage von Werkstücken nach dem Oberbegriff des Anspruches 1.

Es sind Vorrichtungen bekannt, die einen Ständer haben, an dem ein Schlitten in y-Richtung verschiebbar gelagert ist, der eine Antriebsspindel für Werkzeuge trägt. Der Ständer ist auf einem Schlitten in z-Richtung verschiebbar, während der Schlitten seinerseits auf einem Maschinenbett in x-Richtung verfahrbar ist. Eine solche Vorrichtung ist konstruktiv aufwendig ausgebildet. Insbesondere müssen erhebliche Massen bei der Bearbeitung des Werkstückes bewegt werden.

Die gattungsgemäße Vorrichtung (FR-A-2 612 826) hat einen Träger für ein Werkzeug, der mit Linearantrieben in einer Ebene verstellt werden kann. Der Träger ist mit einem Koppelgetriebe mit zwei Koppelgliedern verbunden, die gelenkig miteinander verbunden sind. Das eine Koppelglied ist über ein Drehgelenk mit dem Träger gekoppelt, so daß dieser um die Achse dieses Drehgelenkes gedreht werden kann. Für die Drehbewegung sowie die Bewegung in einer Ebene sind somit drei Verstellantriebe vorgesehen. Dadurch ist diese Vorrichtung konstruktiv aufwendig ausgebildet.

Der Erfindung liegt die Aufgabe zugrunde, die gattungsgemäße Vorrichtung so auszubilden, daß sie einen einfachen konstruktiven Aufbau hat und so gestaltet ist, daß nur geringe Massen bewegt werden müssen.

Diese Aufgabe wird bei der gattungsgemäßen Vorrichtung erfindungsgemäß mit den kennzeichnenden Merkmalen des Anspruches 1 gelöst.

Der Träger, der das Werkzeug, aber auch das Werkstück tragen kann, wird mittels des Koppelgetriebes mit den zwei Koppelgliedern in einer Ebene bewegt. Das Koppelgetriebe führt zu einer hochdynamischen Vorrichtung mit nur geringen Massen, so daß der Träger schnell in die gewünschte Lage verstellt werden kann. Aufgrund der geringen Massen der Koppelglieder sind keine leistungsstarken Motoren erforderlich. Das Koppelgetriebe ermöglicht die ebene Bewegung des Trägers und sperrt einen Freiheitsgrad normal zur Bewegungsebene. Das dieser Vorrichtung zugrundeliegende kinematische Schema beruht somit auf der ebenen Bewegung mit zwei Freiheitsgraden. Es kann mit Hilfe zusätzlicher Achsen auf mehr als zwei Achsen erweitert werden. Da das eine Koppelglied starr mit dem Träger verbunden ist, erfährt der Träger bei der Bewegung dieses Koppelgliedes eine kinematisch bestimmte Drehbewegung.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in perspektivischer und vereinfachter Darstellung eine erste Ausführungsform einer erfindungsgemäßen Vorrichtung,
- Fig. 2a bis Fig. 2d: verschiedene Positionen eines Trägers einer zweiten Ausführungsform einer erfindungsgemäßen Vorrichtung,
- Fig. 3: in einer Darstellung entsprechend Fig. 1 die zweite Ausführungsform der erfindungsgemäßen Vorrichtung,
- Fig. 4 bis Fig. 6: jeweils in perspektivischer Darstellung verschiedene Ausführungsformen von Koppelgetrieben der erfindungsgemäßen Vorrichtung,
- Fig. 7: die Ausführungsform gemäß Fig. 4 in einem Maschinengestell.

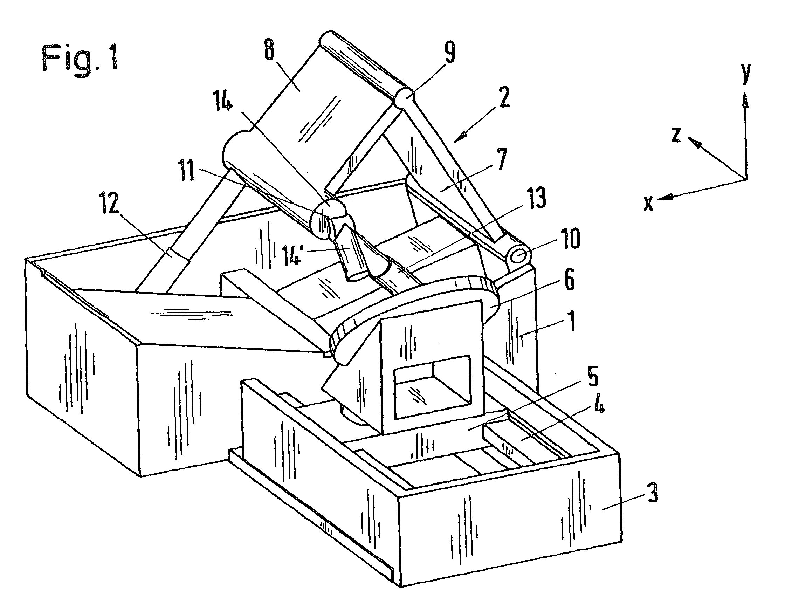

Die Vorrichtung dient zur Bearbeitung von Werkstücken und/oder zur Montage. Fig. 1 zeigt eine Vorrichtung mit einem Gestell 1, das mit einem Koppelgetriebe 2 versehen ist. Mit ihm kann ein (nicht dargestellter) Träger in einer Ebene bewegt werden. Der Träger kann ein Werkzeug, aber auch ein Werkstück tragen. In den folgenden Ausführungsbeispielen wird davon ausgegangen, daß der Träger ein Werkzeug aufweist.

Vor dem Träger befindet sich ein Werkstücktisch 3 mit einer in z-Richtung verlaufenden Geradführung 4, längs der ein Schlitten 5 in z-Richtung verfahrbar ist. Auf dem Schlitten 5 befindet sich eine Spannplatte 6, auf der in bekannter Weise das zu bearbeitende Werkstück aufgespannt werden kann. Mit dem Schlitten 5 kann das Werkstück in z-Richtung für die Bearbeitung verschoben werden.

Das Koppelgetriebe 2 hat zwei gelenkig miteinander verbundene Koppelglieder 7 und 8, die an ihren einander zugewandten Rändern durch eine in z-Richtung liegende Achse 9 schwenkbar miteinander verbunden sind. Das Koppelglied 7 ist am gegenüberliegenden Rand über eine ebenfalls in z-Richtung liegende Achse 10 gelenkig am Gestell 1 gelagert.

Das Koppelglied 8 weist an seinem von der Schwenkachse 9 abgewandten Rand eine parallel zu ihr verlaufende weitere Achse 11 auf, an der zwei Linearaktoren 12 und 13 mit einem Ende angelenkt sind. Die anderen Enden der Linearaktoren 12, 13 sind am Gestell 1 schwenkbar gelagert. Im dargestellten Ausführungsbeispiel liegen die beiden Linearaktoren 12, 13 in der x-y-Ebene. Innerhalb dieser Ebene können die Linearaktoren 12, 13 in noch zu beschreibender Weise geschwenkt werden.

Die Koppelglieder 7, 8 sind so ausgebildet, daß sie lediglich gegeneinander um die Schwenkachsen 9 und 10 schwenken können. Eine Biegung der Koppelglieder quer zu ihrer Ebene ist nicht möglich. Das Koppelgetriebe 2 ermöglicht somit eine ebene Bewegung eines Trägers 14 für das Werkzeug und sperrt einen Freiheitsgrad normal zur Ebene der jeweiligen Koppelglieder 7, 8. Das Koppelglied 8 ist starr mit dem Träger 14 verbunden.

Im dargestellten Ausführungsbeispiel nach Fig. 1 ist am Träger 14 ein Trägerelement 14' angelenkt, das um eine senkrecht zur Achse 11 in x-Richtung liegende Achse geschwenkt und um die z-Achse gedreht werden kann. Dieses Trägerelement 14' trägt das Werkzeug. Bei einer einfachen Ausführung ist das Werkzeug unmittelbar am Träger 14 gehalten.

Um die gewünschte Steifigkeit der Koppelglieder 7, 8 senkrecht zur Bewegungsebene zu erreichen, können sie beispielhaft als Hohlkörper oder plattenförmig ausgebildet sein. Es ist auch möglich, die Koppelglieder 7, 8 beispielsweise durch zwei die entsprechenden Achse 9 bis 11 verbindende Stäbe zu bilden, die jeweils durch mindestens eine Querstrebe miteinander verbunden sind.

Die Linearaktoren 12, 13 sind beispielsweise Zylinder-Kolben-Einheiten. Der Zylinder ist im dargestellten Ausführungsbeispiel am Gestell 1 angelenkt, während der Kolben mit seinem freien Ende an der Achse 11 angelenkt ist. Die beiden Linearaktoren 12, 13 liegen, bezogen auf ihre Anlenkpunkte am Gestell 1, konvergierend zueinander und ihre Kolbenstangen greifen an einem Ende der Achse 11 an. Durch Ein- und Ausfahren der Kolbenstangen werden die Koppelglieder 7, 8 im gewünschten Maße um die jeweiligen Achsen 9 bzw. 10 geschwenkt. Dadurch wird der starr mit dem Koppelglied 8 verbundene Träger 14 in die gewünschte Lage gebracht.

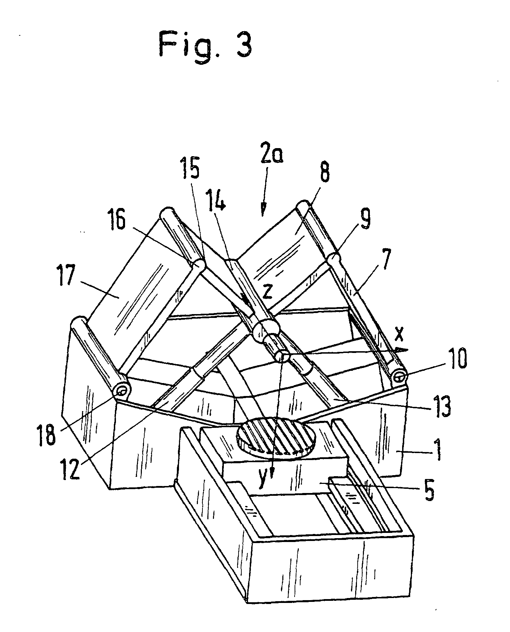

Fig. 3 zeigt eine Ausführungsform, bei der das Koppelgetriebe 2a durch zwei spiegelsymmetrisch zueinander angeordnete Koppelgetriebe gemäß Fig. 1 gebildet ist. Das Koppelgetriebe 2a weist dementsprechend die Koppelglieder 7 und 8 auf, die in der beschriebenen Weise um die Achsen 9 und 10 gegeneinander sowie gegenüber dem Gestell 1 verschwenkt werden können. Das Koppelglied 8 ist im Gegensatz zur Ausführungsform nach Fig. 1 gelenkig mit dem Träger 14 verbunden, an dem starr ein Koppelglied 15 befestigt ist. Es ist vorteilhaft gleich ausgebildet wie das Koppelglied 8 und ist über eine in z-Richtung liegende Achse 16 schwenkbar mit einem Koppelglied 17 verbunden. Es ist seinerseits an seinem von der Schwenkachse 16 abgewandten Rand gelenkig mit dem Gestell 1 verbunden. Dieses Koppelglied 17 kann um die ebenfalls in z-Richtung liegende Achse 18 gegenüber dem Gestell 1 geschwenkt werden.

Das Koppelgetriebe 2a hat die Form eines M und besteht aus fünf Koppelelementen, welche durch die Koppelglieder 7, 8, 15, 17 und das Gestell 1 gebildet werden. Die beiden Linearaktoren 12, 13 sind gleich ausgebildet wie beim vorigen Ausführungsbeispiel und mit einem Ende am Gestell 1 und mit ihrem anderen Ende am Träger 14 angelenkt. Durch Betätigen der Linearaktoren 12, 13 wird der Träger 14 in der beschriebenen Weise in der x-y-Ebene in die gewünschte Lage verstellt. Die Koppelglieder 7, 8 schwenken hierbei gegeneinander sowie gegenüber dem Gestell 1 und dem Träger 14. Das Koppelglied 17 wird bei dieser Verstellung um die Achse 18 gegenüber dem Gestell 1 und um die Achse 16 gegenüber dem Koppelglied 15 geschwenkt. Da das Koppelglied 15 starr mit dem Träger 14 verbunden ist, findet eine Relativbewegung zwischen diesem Koppelglied 15 und dem Träger 14 nicht statt. Wie beim vorigen Ausführungsbeispiel schwenken die Linearaktoren 12, 13 im erforderlichen Maße gegenüber dem Gestell um in z-Richtung liegende Achsen. Je nach gewünschter Lage des Trägers 14 wird wenigstens einer der beiden Linearaktoren 12, 13 ausgefahren. Durch entsprechende Abstimmung der Stellbewegungen der beiden Linearaktoren 12, 13 läßt sich auf diese Weise der Träger 14 genau und einfach in die erforderliche Lage innerhalb der x-y-Ebene verstellen.

Die Linearaktoren 12, 13 müssen nicht, wie bei den beschriebenen Ausführungsbeispielen, in der x-y-Ebene liegen, sondern können auch räumlich angeordnet sein, d.h. unter einem Winkel zur x-y-Ebene liegen.

Aufgrund der doppelten Ausführung des Koppelgetriebes 2a ergibt sich eine symmetrische Steifigkeitsverteilung innerhalb des Getriebes. Sind die Koppelglieder 7, 8, 15, 17, wie in Fig. 3 dargestellt, spiegelsymmetrisch zueinander angeordnet, ergibt sich eine symmetrische Steifigkeitsverteilung.

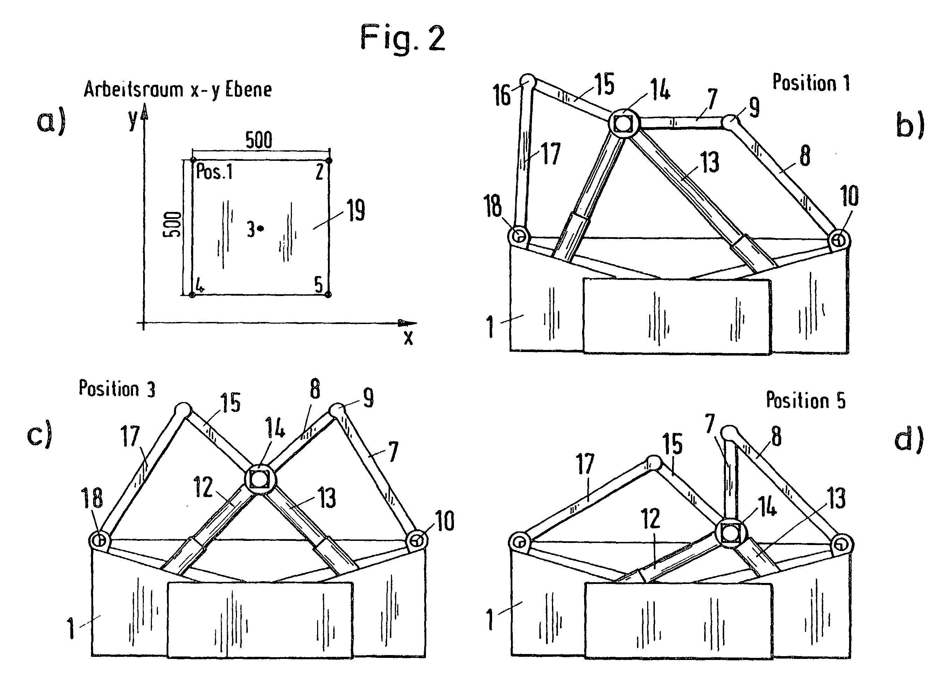

Die Fig. 2a bis 2d zeigen verschiedene Positionen des Trägers 14. Fig. 2a zeigt den Arbeitsraum in der x-y-Ebene, innerhalb der sich der Träger 14 mittels des Koppelgetriebes 2a verstellen läßt.

Fig. 2c zeigt die Lage des Trägers 14 entsprechend Fig. 3. Die Koppelglieder 7, 8, 15, 17 nehmen die Form eines M ein. Die beiden Linearantriebe 12, 13 divergieren von ihrer Anlenkstelle am Träger 14 aus nach unten. Der Träger 14 befindet sich in dieser Stellung mittig im Arbeitsraum 19 (Fig. 2a) der Vorrichtung. Die entsprechenden Positionen des Trägers 14 sind mit "3" angegeben.

Fig. 2b zeigt beispielhaft die Stellung der einzelnen Glieder des Koppeltriebes 2a, wenn sich der Träger 14 in der Position 1 befindet. Der Linearantrieb 13 muß hierzu ausgefahren werden, um den Träger 14 in diese Position 1 zu verstellen. Die Koppelglieder 7, 8 werden bei dieser Verstellbewegung um die zueinander parallelen, in z-Richtung liegenden Achsen 9 und 10 gegeneinander bzw. gegenüber dem Gestell 1 verschwenkt. Da das Koppelglied 15 starr mit dem Träger 14 verbunden ist, findet bei dieser Verstellung des Trägers 14 eine Relativbewegung zwischen ihm und dem Koppelglied 15 nicht statt. Das Koppelglied 17 wird bei dieser Verstellung um die Achsen 16 und 18 gegenüber dem Koppelglied 15 sowie dem Gestell 1 verschwenkt.

Fig. 2d zeigt beispielhaft den Fall, daß der Träger 14 in die Position 5 verstellt worden ist. In diesem Falle ist der Linearaktor 13 eingefahren, so daß der Träger 14 in die entsprechende Position 5 innerhalb der x-y-Ebene verstellt wird. Die Koppelglieder 7, 8 führen die erforderlichen Verschwenkbewegungen gegeneinander aus. Zwischen dem Träger 14 und dem Koppelglied 15 findet eine Relativbewegung wiederum nicht statt, da die beiden Elemente starr miteinander verbunden sind.

Bei der Verstellung des Trägers 14 können die Linearaktoren 12, 13, falls notwendig, im erforderlichen Maße gegenüber dem Gestell 1 sowie gegenüber dem Träger 14 um die in z-Richtung liegenden Achsen schwenken.

Auf diese Weise kann der Träger 14 innerhalb des in Fig. 2a dargestellten Arbeitsraumes an jede gewünschte Stelle bewegt werden.

Infolge der festen Verbindung zwischen dem Koppelglied 15 und dem Träger 14 erfährt dieser durch eine Bewegung in der x- oder y-Richtung eine kinematisch bestimmte Drehbewegung um die z-Achse. Die axiale und radiale Lagerung der Koppelglieder 7, 8, 15, 17 in den übrigen Gelenkpunkten, die nur eine Drehbewegung, also nur einen Freiheitsgrad, zulassen müssen, kann durch Drehlager realisiert werden. Diese Drehlager können jede geeignete Ausbildung haben.

Da der Träger 14 bei den Ausführungsformen nach den Fig. 1 und 3 in z-Richtung nicht verstellbar ist, wird das Werkstück mittels des Schlittens 5 in z-Richtung relativ zum Gestell 1 verschoben. Aufgrund der beschriebenen stufenlosen Verstellbarkeit des Trägers 14 innerhalb der x-y-Ebene kann das entsprechende Werkzeug an jede gewünschte Stelle des Werkstückes herangefahren werden.

Um die Istposition des Trägers 14 zu bestimmen, ist aufgrund der nicht kartesisch angeordneten Linearaktoren 12, 13 eine Koordinatentransformation erforderlich. Sie stellt die Koppelung zwischen der Stellbewegung der Linearaktoren 12, 13 und der daraus resultierenden Lage des Trägers 14 her. Wird die Vorrichtung mit einem fünfgliedrigen Koppelgetriebe entsprechend Fig. 3 ausgebildet, kann die Kinematik zwischen Linearaktor 12, 13 und Träger 14 mit Hilfe eines Koppelgliedes auf einen Doppelexzenter zurückgeführt werden. Das starr mit dem Träger 14 verbundene Koppelglied 15 beschreibt in Verbindung mit dem weiteren Koppelglied 17 und dem Träger 14 einen Doppelexzenter. Durch eine Koordinatentransformation kann die Sollposition des Trägers 14 in x-y-Koordinaten vorgegeben werden. Aufgrund der festen Verbindung zwischen dem Träger 14 und dem Koppelglied 15 läßt sich über eine solche Koordinatentransformation, die bekannt ist und darum nicht näher beschrieben wird, die erforderliche kinematisch bestimmte Drehbewegung des Trägers 14 berechnen. In Verbindung mit den bekannten ortsfesten Anlenkpunkten der beiden Linearaktoren 12, 13 am Träger 14 und der Gelenkpunkte am Gestell 1 bzw. Fundament 1 können die resultierenden Längen der Linearaktoren 12, 13 berechnet werden. Sie werden auf die berechneten Beinlängen ausgefahren, wodurch die gewünschte Lage des Trägers 14 in der x-y-Ebene erreicht wird.

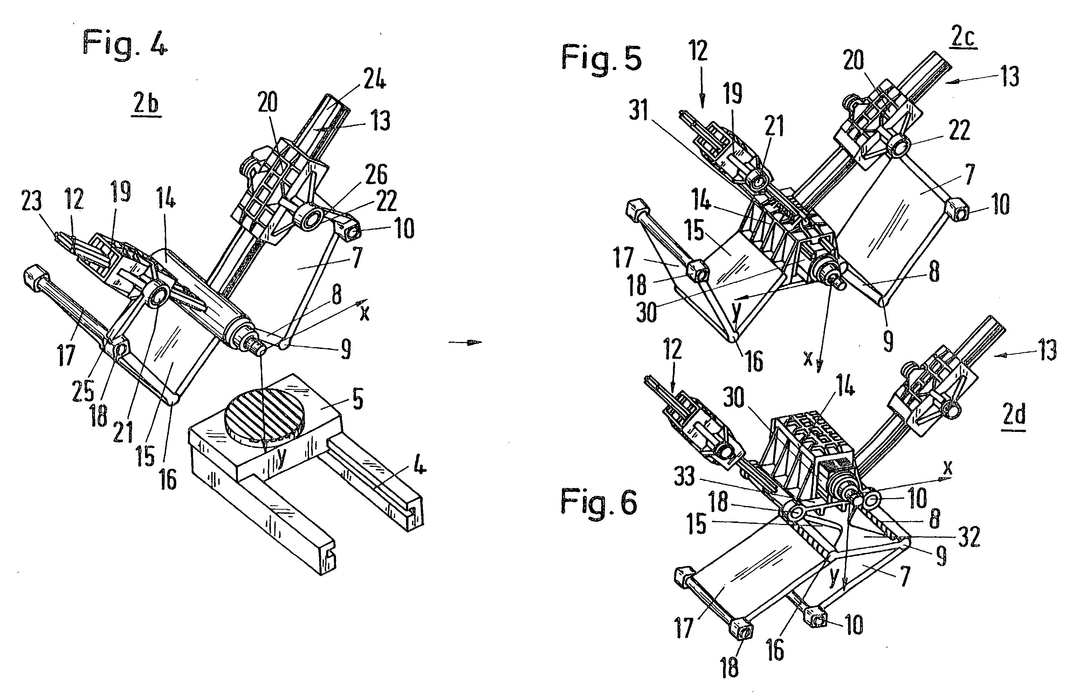

Fig. 4 zeigt beispielhaft zwei Lineardirektantriebe für die Linearaktoren 12, 13. Solche Lineardirektantriebe sind bekannt und werden darum nicht näher erläutert. Die Lineardirektantriebe 12, 13 haben jeweils ein Gehäuse 19, 20, das jeweils schwenkbar im (nicht dargestellten) Gestell gelagert ist. Beim Betätigen der Lineardirektantriebe 12, 13 können die Gehäuse 19, 20 um die in z-Richtung liegenden Achsen 21, 22 schwenken, falls dies erforderlich ist. Die Gehäuse 19, 20 der Lineardirektantriebe 12, 13 können somit gegenüber dem Gestell 1 lediglich Schwenkbewegungen ausführen. In den Gehäusen 19, 20 sind in bekannter Weise schienenförmige Läufer 23 und 24 verschiebbar gelagert. Die beiden Läufer 23, 24 verlaufen vom Träger 14 aus, an dem sie angelenkt sind, divergierend. Die beiden Lineardirektantriebe 12, 13 sind wiederum in einer gemeinsamen x-y-Ebene angeordnet. Sie können aber auch, wie dies anhand der vorigen Ausführungsbeispiele erläutert worden ist, räumlich, d.h. unter einem Winkel zur x-y-Ebene angeordnet sein. Durch Verschieben der Läufer 23, 24 relativ zum zugehörigen Gehäuse 19, 20 wird der Träger 14 in der beschriebenen Weise innerhalb der x-y-Ebene in die gewünschte Position verstellt.

Das Koppelglied 15 des Koppelgetriebes 2b ist wiederum starr mit dem Träger 14 und über die Schwenkachse 16 gelenkig mit dem Koppelglied 17 verbunden. Das Koppelglied 17 ist wiederum über die Achse 18 am Gestell 1 oder einem entsprechenden Fundament schwenkbar gelagert. Die beiden Koppelglieder 7, 8 sind über die Schwenkachse 9 gelenkig miteinander verbunden. Das Koppelglied 8 ist, wie dies anhand der vorigen Ausführungsformen beschrieben worden ist, gelenkig mit dem Träger 14 verbunden. Das Koppelglied 7 ist über die Achse 10 gelenkig mit dem Gestell 1 oder einem Fundament verbunden. Die verschiedenen Achsen liegen parallel zueinander und verlaufen in z-Richtung.

Auf der Schwenkachse 18 ist das eine Ende eines Verbindungsarmes 25 schwenkbar gelagert, dessen anderes Ende um die Achse 21 schwenkbar mit dem Gehäuse 19 verbunden ist. Auch das andere Gehäuse 20 des Lineardirektantriebes 13 ist durch einen Verbindungsarm 26 gelenkig mit dem Koppelglied 7 verbunden. Die beiden Schwenkachsen des Verbindungsarmes 26 werden durch die Achsen 21 und 10 gebildet.

Im Unterschied zur Ausführungsform nach Fig. 3 sind die Koppelglieder 7, 8, 15, 17 in Form eines W angeordnet. Die beiden Koppelglieder 7, 15 verlaufen vom Träger 14 aus divergierend nach unten, während sie beim Ausführungsbeispiel nach Fig. 3 vom Träger 14 divergierend schräg nach oben gerichtet sind.

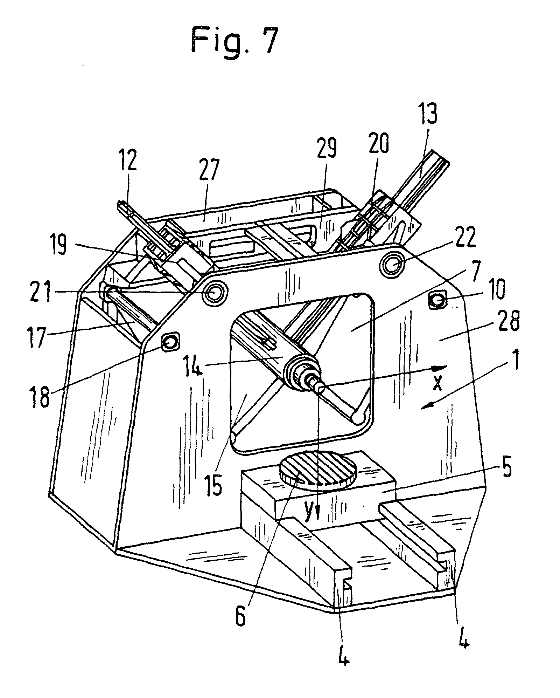

Fig. 7 zeigt die Vorrichtung gemäß Fig. 4, eingebaut in das Gestell 1. Es hat die Außenseiten 27, 28 sowie eine Zwischenwand 29. Die Gehäuse 19, 20 der Lineardirektantriebe 12, 13 sind in der Seitenwand 28 sowie in der Zwischenwand 29 nahe deren oberen Rändern schwenkbar gelagert. Die Koppelglieder 7, 8, 15, 17 befinden sich im Bereich zwischen der Seitenwand 28 und der Zwischenwand 29 des Gestelles 1. Die Koppelglieder 7, 17 sind über die Schwenkachsen 10, 18 in der Seitenwand 28 und der Zwischenwand 29 schwenkbar gelagert.

Bei dieser Ausführungsform ist die z-Bewegung auf der Werkstückseite vorgesehen. Der Schlitten 5 kann in z-Richtung längs der in z-Richtung sich erstreckenden Geradführung 4 in gewünschtem Maße verschoben werden. Die Spannplatte 6 auf dem Schlitten 5 kann zudem um eine in y-Richtung liegende Achse drehbar ausgebildet sein, so daß das Werkstück für die Bearbeitung auch um diese Achse gedreht werden kann.

Fig. 5 zeigt eine Ausführungsform, bei der die z-Bewegung der Maschinen- bzw. Werkzeugseite zugeordnet ist. Der Träger 14 ist als Gehäuse ausgebildet, in dem eine Pinole 30 in z-Richtung verschiebbar angeordnet ist. Am gehäuseförmigen Träger 14 ist das Koppelglied 15 des Koppelgetriebes 2c starr befestigt, das in der beschriebenen Weise über die in z-Richtung liegende Achse 16 mit dem Koppelglied 17 gelenkig verbunden ist. Auf der anderen Seite des gehäuseförmigen Trägers 14 ist in der beschriebenen Weise das Koppelglied 8 angelenkt, das über die in z-Richtung liegende Achse 9 schwenkbar mit dem Koppelglied 7 verbunden ist. Im Gegensatz zum Ausführungsbeispiel nach den Fig. 4 und 7 ist das Gehäuse 19, 20 nicht über Verbindungsarme mit den Koppelgliedern 7, 17 verbunden. Die Gehäuse 19, 20 der Lineardirektantriebe 12, 13 sind am Gestell 1 oder an einem Fundament um die Achsen 21, 22 schwenkbar gelagert. Die beiden Koppelglieder 7, 17 sind wiederum über die Achsen 10, 18 gelenkig mit dem Gestell 1 verbunden.

Die Pinole 30 wird in z-Richtung verschoben und kann über eine entsprechende Linearaktortechnik verschiebbar angetrieben werden. Da die Pinole mit dem entsprechenden Bearbeitungswerkzeug verbunden ist, kann somit das Werkzeug relativ zum Werkstück in z-Richtung verschoben werden. In diesem Falle ist eine Verschiebbarkeit des Werkstückes in z-Richtung nicht erforderlich. Selbstverständlich kann aber auch in diesem Falle der Schlitten 5 sowie die Geradführung 4 vorgesehen sein. Dann können sowohl das Werkzeug als auch das Werkstück in z-Richtung bewegt werden.

Der Antrieb für die Pinole 30 kann relativ zwischen der Pinole 30 und dem gehäuseförmigen Träger 14 als auch relativ zwischen der Pinole 30 und dem fest stehenden Gestell 1 bzw. Fundament erfolgen.

Am Anschlußbereich des Koppelgliedes 15 an den gehäuseförmigen Träger 14 sind nebeneinander liegende Versteifungsrippen 31 vorgesehen, die zu einer hohen Festigkeit der miteinander verbundenen Bauteile 14, 15 in diesem Bereich führen.

Die Ausführungsform nach Fig. 5 stellt eine geschlossene kinematische Kette mit der getragenen z-Achse in Form der Pinole 30 dar. Diese Vorrichtung beschreibt ein Kinematikkonzept mit drei Freiheitsgraden in x-, y- und in z-Richtung.

Fig. 6 zeigt eine veränderte Anordnung des Koppelgetriebes 2d. Die Koppelglieder 7, 17 sind über die in z-Richtung liegenden Achsen 10, 18 mit dem Gestell 1 bzw. einem Fundament gelenkig verbunden. Außerdem sind die Koppelglieder 7, 17 über die Achsen 9, 16 in der beschriebenen Weise gelenkig mit den Koppelgliedern 8, 15 verbunden. Wie bei den vorigen Ausführungsbeispielen greifen die Linearaktoren 12, 13, die im dargestellten Ausführungsbeispiel wiederum als Lineardirektantriebe ausgebildet sind, am Träger 14 an. Er ist entsprechend dem Ausführungsbeispiel nach Fig. 5 gehäuseförmig ausgebildet und nimmt die in z-Richtung verschiebbar angetriebene Pinole 30 auf.

Die Koppelglieder 7, 17 sind an ihren die Drehachsen 9, 16 aufweisenden Rändern durch ein in der x-z-Ebene liegendes Koppelglied 32 miteinander gelenkig verbunden, das entsprechend den Koppelgliedern 7, 8, 15, 17 ausgebildet sein kann. Der Träger 14 ist auf einem weiteren Koppelglied 33 angeordnet, das sich zwischen den Achsen 10, 18 erstreckt. Dieses Koppelglied 33 ist vorteilhaft gleich ausgebildet wie das Koppelglied 32 und liegt parallel zu ihm. Durch diese zusätzlichen Koppelglieder 32, 33 wird eine Parallelogrammausführung gebildet, die dafür sorgt, daß der gehäuseförmige Träger 14 mit der Pinole 30 lediglich in x- bzw. y-Richtung bewegt wird, jedoch keine Drehbewegung um die z-Achse ausführt. Die Pinole 30 bzw. der Träger 14 wird somit ausschließlich translatorisch in der x-y-Ebene bewegt. Durch die fehlende Drehbewegung der z-Achse vereinfacht sich die Koordinatentransformation für die kinematische Struktur, da die kartesischen Weginformationen des Trägers 14 direkt in die Koordinaten der Linearaktoren 12, 13 umgerechnet werden können.

Mit den Linearaktoren 12, 13 kann der Träger 14 in der beschriebenen Weise (Fig. 2a bis 2d) innerhalb der x-y-Ebene in jede gewünschte Lage translatorisch verstellt werden. Über die Pinole 30 ist auch eine Verstellung des Werkzeuges in z-Richtung möglich.

Für die Linearaktoren 12, 13 können außer Lineardirektantrieben auch Gewindetriebe, Zahnstange/Ritzelantriebe, Hydraulikantriebe und dergleichen eingesetzt werden. Mit ihnen ist eine hohe Maschinendynamik möglich. Um kurze Baulängen der Linearaktoren 12, 13 zu ermöglichen, können sie teleskopartig ausgebildet sein.

Werden für die Linearaktoren 12, 13 Gewindetriebe eingesetzt, kann die rotatorische Bewegung des Antriebes direkt über die Spindel in eine translatorische Bewegung umgewandelt werden. Bei solchen Gewindetrieben wird in der Regel die Gewindespindel drehbar angetrieben, wodurch eine auf ihr sitzende Spindelmutter linear verschoben wird. Es ist aber auch möglich, den Antrieb bei solchen Gewindeantrieben über die Spindelmutter vorzunehmen. Dann bewegt sich die Gewindespindel linear. Schließlich ist auch eine kombinierte Drehmomenteneinleitung sowohl über die Gewindespindel als auch über die Spindelmutter möglich. Das hat den Vorteil, daß die Drehzahl des gesamten Gewindetriebes weit oberhalb der kritischen Drehzahl der Gewindespindel liegen kann. In einem solchen Fall lassen sich sehr hohe Verfahrgeschwindigkeiten erreichen.

Durch den einfachen Aufbau der Koppeltriebe und die Möglichkeit zur Verwendung von Standardelementen für Lagerungen und Achsantriebe trägt das Konzept sowohl Fertigungs- und Montage- als auch Kostenaspekten in hohem Maße Rechnung. Ein wesentlicher Vorteil der Koppeltriebe besteht in der geringen bewegten Masse, die im wesentlichen darauf zurückzuführen ist, daß die x- und die y-Achse nicht einander gegenseitig tragen. Die Massen der Koppelglieder 7, 8, 15, 17 werden nicht translatorisch bewegt, sondern lediglich um den jeweiligen Momentanpol geschwenkt.

In den dargestellten und beschriebenen Ausführungsbeispielen werden zur Verstellung des Trägers 14 in der x-y-Ebene die beiden Linearaktoren 12, 13 eingesetzt. Anstelle dieser Linearaktoren können auch Rotationsantriebe verwendet werden, die beispielsweise an den Achsen 10, 18 der Koppelglieder 7, 17 vorgesehen sind. Über solche Rotationsantriebe werden diese Koppelglieder 7, 17 direkt geschwenkt, wodurch ebenfalls die gewünschte Verstellung des Trägers 14 in der x-y-Ebene erfolgt.

Wesentlich bei den Koppelgetrieben ist, daß sie steif ausgebildet sind, so daß sie lediglich um die in z-Richtung liegenden Achsen gegeneinander sowie gegenüber dem Gestell 1 bzw. dem Träger 14 schwenken können. Dadurch ergibt sich ein sehr einfaches Führungsprinzip und insbesondere eine hohe Steifigkeit der Vorrichtung.

## Patentansprüche

1. Vorrichtung zur Bearbeitung und/oder Montage von Werkstücken mit einem Träger (14) zur Aufnahme eines Werkzeugs oder eines Werkstrücks, der durch Linearantriebe (12, 13) verstellbar und mit einem Koppelgetriebe (2, 2a bis 2d) verbunden ist, das wenigstens zwei Koppelglieder (7, 8, 15, 17, 32, 33) aufweist, die gelenkig miteinander verbunden sind und die eine ebene Bewegung des Trägers (14) und eine Sperrung des Freiheitsgrades quer zur Bewegungsebene erlauben,
**dadurch gekennzeichnet, daß** das eine Koppelglied (8, 15, 33) starr mit dem Träger (14) verbunden ist.

2. Vorrichtung nach Anspruch 1,
**dadurch gekennzeichnet, daß** die Linearantriebe (12, 13) am Träger angreifen.

3. Vorrichtung nach Anspruch 1 oder 2,
**dadurch gekennzeichnet, daß** die Koppelglieder (7, 8, 15, 17) plattenförmig ausgebildet sind.

4. Vorrichtung nach einem der Ansprüche 1 bis 3,
**dadurch gekennzeichnet, daß** die Linearantriebe (12, 13) in der Bewegungsebene des Trägers (14) liegen.

5. Vorrichtung nach einem der Ansprüche 1 bis 3,
**dadurch gekennzeichnet, daß** die Linearantriebe (12, 13) unter einem Winkel zur Bewegungsebene des Trägers (14) liegen.

6. Vorrichtung nach einem der Ansprüche 1 bis 5,
**dadurch gekennzeichnet, daß** das Koppelgetriebe (2a bis 2d) vier Koppelglieder (7, 8, 15, 17) aufweist, die in Form eines "M" oder eines "W" zueinander angeordnet sind.

7. Vorrichtung nach Anspruch 6,
**dadurch gekennzeichnet, daß** die Koppelglieder (7, 8, 15, 17) um zueinander parallele Achsen (9, 10, 16, 18) schwenkbar sind.

8. Vorrichtung nach einem der Ansprüche 1 bis 7,
**dadurch gekennzeichnet, daß** die Schwenkachsen (9, 10, 16, 18) der Koppelglieder (7, 8, 15, 17) in z-Richtung liegen.

9. Vorrichtung nach einem der Ansprüche 1 bis 8,
**dadurch gekennzeichnet, daß** der Träger (14) innerhalb der x-y-Ebene verstellbar ist.

10. Vorrichtung nach einem der Ansprüche 1 bis 9,
**dadurch gekennzeichnet, daß** der Träger (14) gehäuseförmig ausgebildet ist und eine Pinole (30) aufnimmt, die quer zur Bewegungsebene des Trägers (14) linear verschiebbar ist.

11. Vorrichtung nach einem der Ansprüche 1 bis 10,
**dadurch gekennzeichnet, daß** das Werkstück in z-Richtung verstellbar ist.

12. Vorrichtung nach einem der Ansprüche 1 bis 11,
**dadurch gekennzeichnet, daß** das Koppelgetriebe (2d) einen Parallelogramm-Getriebeteil (8, 15, 32, 33) aufweist.

13. Vorrichtung nach Anspruch 12,
**dadurch gekennzeichnet, daß** der Parallelogramm-Getriebeteil (8, 15, 32, 33) zwei quer zur Bewegungsebene des Trägers (14) sich erstreckende Koppelglieder (32, 33) aufweist, an welche die weiteren Koppelglieder (8, 15) des Parallelogramm-Getriebeteiles angelenkt sind.

## Claims

1. Apparatus for machining and/or assembly of workpieces, with a bracket (14) for holding a tool or a workpiece, which is adjustable by linear drives (12, 13) and connected with a coupler mechanism (2, 2a to 2d), which comprises at least two coupling links (7, 8, 15, 17, 32, 33), which are pivotally connected with each other and which allow a planar movement of the bracket (14) and a blocking of the degree of freedom transverse to the plane of movement,
**characterised in that** the one coupling link (8, 15, 33) is rigidly connected with the bracket (14).

2. Apparatus according to claim 1,
**characterised in that** the linear drives (12, 13) engage in the bracket (14).

3. Apparatus according to claim 1 or 2,
**characterised in that** the coupling links (7, 8, 15, 17) are formed like plates.

4. Apparatus according to claim 1 to 3,
**characterised in that** the linear drives (12, 13) are situated in the plane of movement of the bracket (14).

5. Apparatus according to one of the claims 1 to 3,
**characterised in that** the linear drives (12, 13) are situated at an angle to the plane of movement of the bracket (14).

6. Apparatus according to one of the claims 1 to 5,
**characterised in that** the coupler mechanism (2a to 2d) comprises four coupling links (7, 8, 15, 17), which are arranged in the form of a "M" or a "W" to each other.

7. Apparatus according to claim 6,
**characterised in that** the coupling links (7, 8, 15, 17) are swivelling around axes (9, 10, 16, 18) parallel to each other.

8. Apparatus according to one of the claims 1 to 7,
**characterised in that** the swivel axes (9, 10, 16, 18) of the coupling links (7, 8, 15, 17) are situated in the z-direction.

9. Apparatus according to one of the claims 1 to 8,
**characterised in that** the bracket (14) is adjustable within the x-y-plane.

10. Apparatus according to one of the claims 1 to 9,
**characterised in that** the bracket (14) is formed like a case and contains a quill (30), which is linearly shiftable transverse to the plane of movement of the bracket (14).

11. Apparatus according to one of the claims 1 to 10,
**characterised in that** the tool is displaceable in the z-direction.

12. Apparatus according to one of the claims 1 to 11,
**characterised in that** the coupler mechanism (2d) comprises a parallelogram gear component (8, 15, 32, 33).

13. Apparatus according to claim 12, **characterised in that** the parallelogram gear component (8, 15, 32, 33) comprises two coupling links (32, 33), extending themselves transversely to the plane of movement of the bracket (14), to which the further coupling links (8, 15) of the parallelogram gear component are linked.

## Revendications

1. Appareil pour usinage et/ou montage de pièces à travailler avec un porteur (14) pour prise d'un outil ou d'une pièce à travailler, le porteur (14) étant déplaçable par entraînements linéaires (12, 13) et est connecté avec un train de couplage (2, 2a à 2d) lequel comprend au moins deux membres de couplage (7, 8, 15, 17, 32, 33) lesquels sont goupillés l'un avec l'autre et lesquels permettent un mouvement du porteur (14) dans un plan et un blocage du degré de liberté transversal au plan de mouvement,
**caractérisé en ce que** l'un des membres de couplage (8, 15, 33) est connecté d'une façon rigide avec le porteur (14).

2. Appareil selon revendication 1,
**caractérisé en ce que** les entraînements linéaires (12, 13) s'appliquent au porteur.

3. Appareil selon revendication 1 ou 2,
**caractérisé en ce que** les membres de couplage (7, 8, 15, 17) sont constitués en forme de plaques.

4. Appareil selon l'une quelconque des revendications 1 à 3,
**caractérisé en ce que** les entraînements linéaires (12, 13) sont situés dans le plan de mouvement du porteur (14).

5. Appareil selon l'une quelconque des revendications 1 à 3,
**caractérisé en ce que** les entraînements linéaires (12, 13) sont situés sous un angle par rapport au plan de mouvement du porteur (14).

6. Appareil selon l'une quelconque des revendications 1 à 5,
**caractérisé en ce que** le train de couplage (2a à 2d) comprend quatre membres de couplage (7, 8, 15, 17) lesquels sont disposés l'un à l'autre en forme d'un "M" ou d'un "W".

7. Appareil selon revendication 6,
**caractérisé en ce que** les membres de couplage (7, 8, 15, 17) sont pivotables autour de deux axes (9, 10, 16, 18) parallèles l'un à l'autre.

8. Appareil selon l'une quelconque des revendications 1 à 7,
**caractérisé en ce que** les axes pivotants (9, 10, 16, 18) des membres de couplage (7, 8, 15, 17) sont situés dans la direction z.

9. Appareil selon l'une quelconque des revendications 1 à 8,
**caractérisé en ce que** le porteur (14) peut être déplacé dans le limites du plan x-y.

10. Appareil selon l'une quelconque des revendications 1 à 9,
**caractérisé en ce que** le porteur (14) est constitué en forme d'enveloppe et prend une broche (30) qui peut être poussé dans un mouvement linéaire transversal au plan de mouvement du porteur (14).

11. Appareil selon l'une quelconque des revendications 1 à 10,
**caractérisé en ce que** la pièce peut être déplacée dans la direction z.

12. Appareil selon l'une quelconque des revendications 1 à 11,
**caractérisé en ce que** le train de couplage (2d) comprend une pièce d'entraînement en forme de parallélogramme (8, 15, 32, 33).

13. Appareil selon revendication 12,
**caractérisé en ce que** la pièce d'entraînement en forme de parallélogramme (8, 15, 32, 33) comprend deux membres de couplage (32, 33) s'étendant transversalement au plan de mouvement du porteur (14) et auxquels les membres de couplage suivants (8, 15) de la pièce d'entraînement en forme de parallélogramme sont assemblés par articulation.
